# EUROPEAN PATENT SPECIFICATION

(11) **EP 1 774 098 B1**
(45) Date of publication and mention of the grant of the patent: **04.03.2009**
(21) Application number: 05759125.7
(22) Date of filing: 05.07.2005
(51) Int. Cl.: D21H 21/16, C08F 2/28, C08F 8/28

(54) **CATIONIC DISPERSIONS FOR SIZING PAPER**
KATIONISCHE DISPERSION ZUM LEIMEN VON PAPIER
DISPERSIONS CATIONIQUES POUR COLLAGE DE PAPIER

(30) Priority: 15.07.2004 FR 0407876
(43) Date of publication of application: 18.04.2007
(73) Proprietor: Clariant Finance (BVI) Limited, Road Town, Tortola (VG)
(72) Inventor: JONCKHEREE, Eric, F-60350 Cuise la Motte (FR); CORPET, Damien, F-71380 Oslon (FR)
(74) Representative: Dünnwald, Dieter
(86) International application number: PCT/IB2005/002158
(87) International publication number: WO 2006/008643

(56) References cited:
- FR-A- 2 737 510
- US-A- 3 444 151
- US-A- 4 954 538
- DATABASE WPI Section EI, Week 198643 Derwent Publications Ltd., London, GB; AN 1986-282783 XP002350084 & JP 61 207697 A (JAPAN CARLIT) 16 September 1986 (1986-09-16)

## Description

The present invention relates to the field of sizing paper and in particular to sizing agents based on cationic aqueous polymer dispersions comprising fine particles.

The invention also relates to a process for obtaining such dispersions.

It is known practice to use sizing agents in the preparation of cellulose-based products such as papers or boards.

In general, there are two kinds of sizing agent: surface sizes and internal sizes.

The term "surface size" means an agent applied to the surface of the cellulose-based material, for example using a sizing press.

The term "internal size" means an agent added to the fibres in the wet part during the manufacture of the cellulose-based material.

A good surface size makes it possible to obtain good resistance to the penetration of aqueous liquids, for instance inks, and also good surface properties, which are particularly important for printability.

Most of the surface sizes known to those skilled in the art exist in the form of anionic or cationic dispersions. Several synthetic methods are possible, especially via emulsion polymerization using a cationic copolymer.

DE-A-2 454 397 describes cationic aqueous polymer dispersions prepared by emulsion copolymerization of ethylenically unsaturated monomers in the presence of a cationic copolymer. The preparation of the cationic copolymer is performed by solution polymerization using monomers containing tertiary or quaternary amino groups in the presence of water-miscible organic solvents. This process has the drawback of using volatile organic solvents, which must be removed before or after the emulsion polymerization.

EP-A-051 144 describes the use of an ethylenically unsaturated carboxylic acid or of maleic anhydride to obtain an amphoteric cationic copolymer as an aqueous dispersion. However, these dispersions have the drawback of foaming during the surface sizing of paper.

EP-A-1 180 527 describes the preparation of a cationic copolymer without using any, or using only very little, volatile organic solvents.

US-A-3 444 151 describes the preparation of imide derivatives of copolymers based on maleic anhydride and their uses in the synthesis of latexes by emulsion polymerization.

FR-A-2 795 076 describes the synthesis of cationic dispersions in the presence of imidized styrene/maleic anhydride copolymers and the application of these dispersions in the internal sizing or the external sizing of papers and boards.

Cationic aqueous dispersions of polymers with a low particle size, which give good hydrophobicity to treated papers and/or boards and also good printability, are currently still being sought.

The Applicant has now found, surprisingly, that the application properties of these cationic aqueous polymer dispersions can be improved by adding glyoxal or a glyoxal-based compound.

The present invention thus relates to a cationic aqueous polymer dispersion, comprising fine polymer particles, characterized in that it comprises at least:
(1) the product of an emulsion polymerization of a monomer mixture comprising, by weight:
   (a) from 20% to 65% of at least one optionally substituted styrene,
   (b) from 35% to 80% of at least one C₁-C₁₈ (meth)acrylic ester,
   (c) from 0 to 20% of at least one ethylenically unsaturated nonionic monomer other than (a) and (b),
   (d) from 0 to 20% of at least one C₃-C₆ ethylenically unsaturated carboxylic acid or a corresponding salt thereof,
   the sum of (a) + (b) + (c) + (d) being 100% by weight,
   the monomer mixture being polymerized in the presence of an emulsifier that comprises and preferably is an aqueous solution of a cationic imidized copolymer of styrene and of maleic anhydride,
(2) glyoxal.

The synthesis of these imidized copolymers, based on the reaction of an amine and of a copolymer (A) based on maleic anhydride, is described in the document US-A-3 444 151. By way of example, the imidized polymers may be obtained by reaction between a polymer and a primary and tertiary diamine, for example dimethylpropylenediamine (DMAPA), preferably by a bulk process. The primary amine functional group will react with the anhydride functional group to form an amic acid and then this ring will reclose to form an imidized polymer.

The imidized copolymers of the present invention are preferably those of the type I described in US-A-3 444151, that is to say those where a diamine totally reacts with the anhydride functional group with a molar ratio of 1 to 1. The use of copolymers exhibiting residue anhydride or acid functional groups, resulting from a reaction with a deficiency of amine, is also possible.

The preferred copolymer (A) of the invention is a copolymer of styrene and of maleic anhydride with a styrene to maleic anhydride ratio of 1/1 to 6/1, preferably of 2/1 to 4/1. The number-average molecular mass of the copolymer is preferably between 500 and 20 000 and more preferably between 2000 and 5000. The degree of imidization of the said copolymer may be between 50 and 100%. The said copolymer may be imidized, for example, with dimethylpropylenediamine.

The copolymer is preferably chosen from copolymers of styrene and of maleic anhydride having acid numbers ranging from 500 to 200 mg KOH/g and sold, by way of example, by the company Sartomer under the names SMA® 1000, SMA® 2000, SMA® 3000, SMA® EF30, SMA® EF40 and SMA® EF60.

After imidization, the copolymer is then dissolved in an aqueous medium and then cationized with an acid to give a cationic emulsifier.

The imidized copolymers are also sold, by way of example, by the company Sartomer under the names SMA® 1000i, SMA® 2000i, SMA® 3000i and SMA® 4000i.

For the preparation of the cationic polymer dispersions according to the invention, monomers chosen from the group consisting of styrene and optionally substituted styrene are used as monomers of the group (a).

The styrene substituents are preferably C₁-C₄ alkyl radicals and halogen atoms, especially chlorine. One or more substituents may be present, for example 2 substituents.

Examples of substituted styrenes that may be mentioned include α-methylstyrene, α-ethylstyrene, vinyltoluenes and chlorostyrenes. Styrene is preferred.

Styrene is particularly preferred.

The monomers of the group (a) may be used in an amount from about 20% to 65% by weight, conveniently from about 25% to 60% by weight and preferably from about 30% to 60% by weight, based on the weight of the monomers used for the emulsion polymerization.

The monomers of the group (b) comprise C₁-C₁₈ (meth)acrylic esters preferably such as methyl acrylate, methyl methacrylate, ethyl acrylate, ethyl methacrylate, propyl acrylate, propyl methacrylate, isopropyl acrylate, isopropyl methacrylate, n-butyl, isobutyl or tert-butyl acrylate, n-butyl, isobutyl or tert-butyl methacrylate, hexyl acrylate, hexyl methacrylate, ethylhexyl acrylate, ethylhexyl methacrylate, stearyl acrylate or stearyl methacrylate.

It is also possible to use mixtures of the abovementioned monomers, for example mixtures of methyl methacrylate and of butyl acrylate.

The monomers of the group (b) may be used in an amount from about 35% to 80% by weight, conveniently from about 38% to 75% by weight and preferably from about 40% to 70% by weight, based on the weight of the monomers used for the emulsion polymerization.

The monomers of the group (c) comprise ethylenically unsaturated nonionic monomers other than a) and b). Examples that may be mentioned include nitriles such as acrylonitrile and methacrylonitrile, amides such as methacrylamide and acrylamide, N-alkanolamides in which the N-alkanol group contains from 1 to 18 and preferably from 1 to 6 carbon atoms, such as N-methylolacrylamide and N-methylolmethacrylamide, vinyls such as vinyl acetate and vinyl propionate, monoethylenically unsaturated carboxylic acid hydroxyalkyl esters in which the hydroxyalkyl group contains from 1 to 18 and preferably from 1 to 6 carbon atoms, such as 2-hydroxyethyl acrylate, 3-hydroxypropyl acrylate, 2-hydroxyethyl methacrylate and 3-hydroxypropyl methacrylate.

The monomers of the group (c) may be used in an amount of from 0 to about 20% by weight, preferably from 0 to about 10% by weight, particularly from 0 to about 5% by weight and more particularly 0% by weight, based on the weight of the monomers used for the emulsion polymerization.

The monomers of the group (d) comprise C₃-C₆ and preferably C₃-C₄ ethylenically unsaturated carboxylic acids or the corresponding salts thereof, for example monocarboxylic acids, for instance acrylic acid and methacrylic acid, dicarboxylic and tricarboxylic acid hemiesters, for instance C₁-C₄ monoesters of maleic acid or of fumaric acid, dicarboxylic acids such as maleic acid, fumaric acid and itaconic acid, tricarboxylic acids such as aconitic acid, and the equivalent C₁-C₄ monoesters or diesters thereof.

The salts may be prepared from the corresponding carboxylic acids by treating the monomers with various bases, for instance sodium hydroxide, potassium hydroxide, ammonia or various amines to give partially or totally neutralized monomers.

Monomers in free acid form and more particularly acrylic acid or methacrylic acid are preferably used.

The monomers of the group (d) may be used in an amount of from 0 to about 20% by weight, preferably from 0 to about 10% by weight and particularly from 0 to about 5% by weight, based on the weight of the monomers used for the emulsion polymerization.

The sum of the parts by weight of (a), (b), (c) and (d) is equal to 100% by weight. The glyoxal used in the present invention is preferably in the form of an aqueous solution, and the usual industrial solutions having a glyoxal content of from 20% to 60% by weight and preferably from 30% to 50% by weight are advantageously used.

Formulations comprising free glyoxal may also be used.

As examples of formulations comprising free glyoxal, mention may be made of the compositions formed of glyoxal, urea and salts which comprise or which may release gem-diol functional groups described in FR-A-2 707 310, for instance Cartabond® TSI, Cartabond® FI and Cartabond® FIW sold by the company Clariant.

The amount of glyoxal in the cationic aqueous polymer dispersions of the present invention may advantageously range from 0.2% to 15% by dry weight, preferably from 0.5% to 12% by dry weight and more preferably from 1% to 8% by dry weight.

Another subject of the invention is a process for preparing a cationic aqueous polymer dispersion comprising fine particles, characterized by:
(1) the preparation of an aqueous solution of an imidized styrene/maleic anhydride copolymer and then cationization with an acid to obtain an aqueous solution of a cationic imidized copolymer of styrene and of maleic anhydride, and
(2) the emulsion polymerization of a monomer mixture comprising, by weight:
   (a) from 20% to 65% of at least one optionally substituted styrene,
   (b) from 35% to 80% of at least one C₁-C₁₈ (meth)acrylic ester,
   (c) from 0 to 20% of at least one ethylenically unsaturated nonionic monomer other than a) and b),
   (d) from 0 to 20% of at least one C₃-C₆ ethylenically unsaturated carboxylic acid or a corresponding salt thereof,
   the sum of (a) + (b) + (c) + (d) being 100% by weight, in the presence of the said aqueous solution, and
(3) addition of glyoxal.

The polymerization is performed in two steps, in which the imidized styrene/maleic anhydride copolymer is first dissolved in an aqueous medium and then neutralized with an acid.

The acid used is preferably a volatile acid, preferably a volatile organic acid, for instance acetic acid or formic acid.

The concentration of the aqueous solution of cationic imidized styrene/maleic anhydride copolymer varies between 2% and 30% by weight, preferably between 5% and 25% by weight and more preferably between 10% and 20% by weight.

In the present patent application, the cationic aqueous polymer dispersions obtained under such conditions are called cationic aqueous polymer dispersions in which the emulsifier is a 2% to 30% by weight, preferably between 5% and 25% by weight and more preferably between 10% and 20% by weight aqueous solution of a cationic imidized styrene/maleic anhydride copolymer.

The said aqueous solution, from which the organic solvents may optionally be stripped by distillation, serves as emulsifier for the second stage of the polymerization, during which the monomers from groups (a) to (d) are emulsion-copolymerized using the conventional techniques known to those skilled in the art and described, for example, in "Encyclopedia of Polymer Science and Engineering, Vol. 6, Emulsion Polymerization, pages 1-51, John Wiley & Son, Inc., 1986".

The two stages of the process may be performed in the same container ("one-pot") without isolation of the emulsifier.

A usual free-radical-initiating system is also preferably used during the emulsion polymerization step.

The free-radical initiator may be a water-soluble initiator such as ammonium persulphate, potassium persulphate or sodium persulphate, optionally combined with a reducing agent such as sodium metabisulphite, or alternatively hydrogen peroxide or a hydroperoxide, for instance tert-butyl hydroperoxide, optionally combined with a reducing agent, for instance ascorbic acid or iron (II) sulphate.

This initiator may also be organosoluble, for instance azo derivatives such as azobisisobutyronitrile (AIBN) or organic peroxides.

The emulsion polymerization temperature is preferably between 30°C and 100°C and more preferably between 60°C and 90°C, and will be adapted to the initiating system used.

The emulsion polymerization is preferably performed under an inert atmosphere such as a nitrogen atmosphere, and for a time ranging from 0.5 hour to 10 hours.

The monomers of groups (a) to (d) are preferably added continuously to the reactor, either as a mixture or separately of each other, the addition possibly being uniform or non-uniform.

During the emulsion polymerization, the monomers are introduced into the reactor either in undiluted form or in the form of an aqueous solution.

For the emulsion of the monomers in water, a portion of the aqueous solution of a cationic imidized styrene/maleic anhydride copolymer from the first polymerization stage may be used, but common emulsifiers may also be used.

According to one preferred aspect of the invention, only a portion of the free-radical-initiating system is initially introduced before the addition of the monomers into the emulsifier obtained during the first polymerization stage, and the rest is then added continuously during the emulsion polymerization.

According to another preferred aspect of the invention, the continuous addition of the monomers and the continuous addition of the free-radical-initiating system begin simultaneously.

If, according to one preferred aspect of the invention, a free-radical initiator is used in combination with a reducing agent, the reducing agent is preferably introduced initially before the start of the emulsion polymerization.

It is also possible, during or after the emulsion polymerization, to use other common cationic, anionic, amphoteric or nonionic emulsifiers in order to modify the application properties of the dispersion of the present invention.

Examples that may be mentioned include alkyl sulphates, alkylaryl sulphonates, ethoxylated fatty alcohols, quaternary alkylammonium salts, for instance alkyldimethylbenzylammonium chlorides, distearyldimethylammonium chloride or lauryltrimethylammonium chloride, and alkyldimethylamines.

According to one variant of the process, an organosoluble free-radical initiator may be added at the end of the emulsion polymerization to reduce the content of residual monomers.

Organic peroxides such as dibenzoyl peroxide, di-tert-butyl peroxide, tert-butyl hydroperoxide or cumyl hydroperoxide are preferably used.

The pH of the emulsion polymerization product is preferably between 2 and 5 and may be optionally adjusted by addition of acids, bases or buffers.

The cationic aqueous polymer dispersions comprising fine particles are obtained according to the invention by introducing, with stirring, glyoxal into the emulsion polymerization product.

This introduction is preferably performed at a temperature below or equal to 30°C and more preferably at room temperature.

The cationic dispersions of the present invention may contain various additives.

Examples that may be mentioned include preserving agents, antifoams and optical brighteners.

Mention may also be made of electrolytes such as aluminium salts, which facilitate the binding of the dispersions of the present invention. Examples of suitable aluminium salts include aluminium sulphate, aluminium formate, aluminium chloride and polyaluminium chloride.

The cationic dispersions of the invention have a dry extract of between 20% and 50% and preferably between 20% and 40%.

They have a mean particle size of between 50 nm and 200 nm and preferably less than 150 nm.

Furthermore, they have a low viscosity, preferably of less than 100 mPa.s.

They are free or virtually free of volatile solvents (less than 5% by weight, preferably less than 1% by weight and more preferably free of volatile solvents) and have a low foam tendency.

They have very good compatibility with the starches that may be used in the sizing press, this holding true even at high temperature.

They have very good stability over time and also very good mechanical stability.

They also have high hydrophobicity.

These properties justify the use of the cationic dispersions of the present invention as internal sizes or surface sizes for treating papers and boards.

The invention thus also relates to the application of a cationic aqueous polymer dispersion comprising fine particles, defined above, as an internal size or a surface size for the treatment of cellulose-based products.

The dispersions of the present invention are particularly useful for the surface sizing of papers and boards, for instance printing paper, newspaper paper, recycled paper, wrapping paper, test-liner paper and flat board.

The use of the dispersions in accordance with the invention as surface sizes is generally performed in combination with components conventionally used in surface sizing, such as starch and/or starch derivatives.

The dispersions in accordance with the invention having high dry extracts may be diluted with water or mixed with aqueous solutions before use, for example aqueous solutions of starch and/or of starch derivatives.

The dispersions of the present invention may be incorporated into the cellulose-based fibre pulp after refining it but before it has been transformed into sheets, optionally in combination with other internal sizes such as alkylketene dimer (AKD) and alkylsuccinic anhydrides (ASA).

The dispersions of the present invention may also be applied to the surface of the cellulose-based material, generally together with materials conventionally used for surface sizing, for instance starch, starch derivatives or mineral fillers, followed by drying. The application is generally performed by spraying or dipping, for example using a sizing press.

A subject of the present patent application is thus also a process for manufacturing paper or board, in which the said paper or board is prepared conventionally, but a dispersion of the present invention is incorporated into the cellulose fibre pulp after it has been refined, but before it has been transformed into sheets.

A subject of the present patent application is also a process for making paper or board, in which the said paper or board is prepared conventionally, but a dispersion of the present invention is applied to the surface of the cellulose material.

Finally, a subject of the present invention is a paper or board manufactured using the process described above.

### EXAMPLES

The mean particle diameter measurements were taken by means of the PCS (Photon Correlation Spectroscopy) technique using a Malvern 2C Autosizer.

### EXAMPLE 1

### A. Dissolution of the imidized styrene/maleic anhydride copolymer

1400 g of styrene/maleic anhydride copolymer imidized with dimethylaminopropylamine with a styrene/maleimide ratio of 4/1 (SMA® 4000i), 5390 g of water and 210 g of glacial acetic acid are introduced into a 10 l three-necked glass reactor equipped with a mechanical stirring system, a condenser and a temperature probe. The mixture is brought to 80°C and is kept stirred until the oligomer has completely dissolved (approximately 4 hours).

The aqueous solution obtained exhibits a concentration of SMA 4000i of approximately 20%.

### B. Synthesis of the cationic dispersion

651 g of the above aqueous SMA® 4000i solution and 229 g of water are introduced in order into a 2 I reactor equipped with a mechanical stirring system. The mixture is brought to 85°C +/-1 °C under nitrogen and with stirring. When the temperature is reached, 5.2 g of a 1% iron sulphate solution and then 25.1 g of a 6% aqueous hydrogen peroxide solution are introduced. 126.6 g of styrene and 126.6 g of butyl acrylate are run in over 2 hours using metering pumps. In parallel and over the same period of time, 107.2 g of a 6% aqueous hydrogen peroxide solution are added. When the addition of the various components is complete, 280 g of water are added to rinse out the pumps. The reaction medium is subsequently maintained at 85°C for a further 30 minutes, then 22 g of a 6% aqueous hydrogen peroxide solution are added and the reaction medium is left at the same temperature for an additional 1 hour. It is then cooled with gentle stirring.

When the temperature of the latex obtained is close to room temperature (below 30°C), 177.3 g of composition formed of glyoxal, urea and salts, sold under the name Cartabond® TSI, are introduced with stirring.

The cationic latex obtained has the following characteristics:
- Dry extract = 25.9%
- Brookfield viscosity at 23°C = 21 mPa·s
- pH = 3.4
- Mean particle diameter = 53 nm.

### COMPARATIVE EXAMPLE 1

The preparation is similar to that of Example 1.

651 g of the above aqueous SMA® 4000i solution and 29 g of water are introduced in order into a 2 l reactor equipped with a mechanical stirring system. The mixture is brought to 85°C +/- 1°C under nitrogen and with stirring. When the temperature is reached, 5.2 g of a 1% iron sulphate solution and then 25.1 g of a 6% aqueous hydrogen peroxide solution are introduced. 126.6 g of styrene and 126.6 g of butyl acrylate are run in over 2 hours using metering pumps. In parallel and over the same period of time, 107.2 g of a 6% aqueous hydrogen peroxide solution are added. When the addition of the various components is complete, 280 g of water are added to rinse out the pumps. The reaction medium is subsequently maintained at 85°C for a further 30 minutes, then 22 g of a 6% aqueous hydrogen peroxide solution are added and the reaction medium is left at the same temperature for an additional 1 hour. It is then cooled with gentle stirring.

The cationic latex obtained has the following characteristics:
- Dry extract = 25.0%
- Brookfield viscosity at 23°C = 23 mPa·s
- pH = 3.6
- Mean particle diameter = 55 nm.

### APPLICATION EXAMPLES

The examples below show the advantageous effect of the cationic dispersions according to the invention for the surface treatment of papers, as regards their water resistance.

The quality of the sizing is assessed by means of the Cobb test, which is well known to those skilled in the art and which proceeds according to standard NF EN 20535 - ISO 535.

The amount of water absorbed after a given time is given in g/m².

The Cobb test is performed herein with a contact time of 60 seconds (Cobb₆₀).

The treatment is performed using a laboratory sizing press (Mathis padder) on a recycled paper of Tesliner® type free of internal size and having a basis weight of 180 g/m²_{.}

The paper is surface-treated by applying about 10 g/m² of a sizing solution containing:
- 250 g by weight of a 10% solution of oxidized potato starch C*5591 from the company Cerestar,
- 7 g or 15 g of the dispersions of Example 1 or of Comparative Example 1, corresponding to 2.8% or 6% in the size solution.

The treatment with the oxidized starch alone gives a reference Cobb₆₀ = 180 g/m².

The results of the Cobb₆₀ values are collated in Table 1.

**TABLE 1**

| **Products** | **Cobb₆₀ at 2.8% (g/m²)** | **Cobb₆₀ at 6% (g/m²)** |
|---|---|---|
| Example 1 | 116 | 51 |
| Comparative Example 1 | 152 | 106 |

The results show a higher water resistance of the recycled papers treated with the cationic dispersions of the invention, when compared with the use of cationic dispersions of the prior art.

## Claims

1. Cationic aqueous polymer dispersion, comprising fine particles, **characterized in that** it comprises at least:
(1) the product of an emulsion polymerization of a monomer mixture comprising, by weight:
(a) from 20% to 65% of at least one optionally substituted styrene,
(b) from 35% to 80% of at least one C₁-C₁₈ (meth)acrylic ester,
(c) from 0 to 20% of at least one ethylenically unsaturated nonionic monomer other than (a) and (b),
(d) from 0 to 20% of at least one C₃-C₆ ethylenically unsaturated carboxylic acid or a corresponding salt thereof,
the sum of (a) + (b) + (c) + (d) being 100% by weight,
the monomer mixture being polymerized in the presence of an emulsifier that is an aqueous solution of a cationic imidized copolymer of styrene and of maleic anhydride,
(2) glyoxal.

2. Cationic aqueous polymer dispersion according to Claim 1, **characterized in that** it contains from 0.2% to 15% by dry weight of glyoxal.

3. Cationic aqueous polymer dispersion according to Claim 1, **characterized in that** it contains from 0.5% to 12% by dry weight of glyoxal.

4. Cationic aqueous polymer dispersion according to Claim 1, **characterized in that** it contains from 1 % to 8% by dry weight of glyoxal.

5. Cationic aqueous polymer dispersion according to one of Claims 1 to 4, **characterized in that** the emulsifier is a 2% to 30% by weight aqueous solution of a cationic imidized styrene/maleic anhydride copolymer.

6. Cationic aqueous polymer dispersion according to one of Claims 1 to 5, **characterized in that** the emulsifier is a 5% to 25% by weight aqueous solution of a cationic imidized styrene/maleic anhydride copolymer.

7. Cationic aqueous polymer dispersion according to one of Claims 1 to 6, **characterized in that** the emulsifier is a 10% to 20% by weight aqueous solution of a cationic imidized styrene/maleic anhydride copolymer.

8. Cationic aqueous polymer dispersion according to one of Claims 1 to 7, **characterized in that** the said copolymer is imidized with dimethylpropylenediamine.

9. Process for preparing a cationic aqueous polymer dispersion comprising fine particles, **characterized by**:
(1) the preparation of an aqueous solution of an imidized styrene/maleic anhydride copolymer and then cationization with an acid to obtain an aqueous solution of a cationic imidized styrene/maleic anhydride copolymer, and
(2) the emulsion polymerization of a monomer mixture comprising:
(a) from 20% to 65% by weight of at least one optionally substituted styrene,
(b) from 35% to 80% by weight of at least one C₁-C₁₈ (meth)acrylic ester,
(c) from 0 to 20% by weight of at least one ethylenically unsaturated nonionic monomer other than a) and b),
(d) from 0 to 20% by weight of at least one C₃-C₆ ethylenically unsaturated carboxylic acid or a corresponding salt thereof,
the sum of (a) + (b) + (c) + (d) being 100% by weight, in the presence of the said aqueous solution, and
(3) addition of glyoxal.

10. Use of a cationic aqueous polymer dispersion comprising fine particles as defined in one of Claims 1 to 8, as an internal size or a surface size for treating cellulose-based products.

11. Use of a cationic aqueous polymer dispersion comprising fine particles, as defined in one of Claims 1 to 8, as a surface size for papers and boards.

12. Process for making paper or board, in which the said paper or board is prepared conventionally, but a cationic aqueous polymer dispersion as defined in one of Claims 1 to 8 is incorporated into the cellulose fibre pulp after it has been refined but before it has been transformed into sheets.

13. Process for making paper or board, in which the said paper or board is prepared conventionally, but a cationic aqueous polymer dispersion as defined in one of Claims 1 to 8 is applied to the surface of the cellulose material.

14. Paper or board made according to either of Claims 12 and 13.

## Patentansprüche

1. Kationische feinteilige wäßrige Polymerdispersion, **dadurch gekennzeichnet, daß** sie mindestens:
(1) das Produkt einer Emulsionspolymerisation einer Monomerenmischung, die
(a) 20 bis 65 Gew.-% mindestens eines gegebenenfalls substituierten Styrols,
(b) 35 bis 80 Gew.-% mindestens eines C₁-C₁₈-(Meth)acrylsäureesters,
(c) 0 bis 20 Gew.-% mindestens eines von (a) und (b) verschiedenen ethylenisch ungesättigten nichtionischen Monomers,
(d) 0 bis 20 Gew.-% mindestens einer ethylenisch ungesättigten C₃-C₆-Carbonsäure oder eines entsprechenden Salzes davon,
wobei sich die Summe von (a) + (b) + (c) + (d) auf 100 Gew.-% beläuft, enthält,
wobei die Monomerenmischung in Gegenwart eines Emulgators, bei dem es sich um eine wäßrige Lösung eines kationischen imidisierten Copolymers von Styrol und Maleinsäureanhydrid handelt, polymerisiert wird,
(2) Glyoxal.
enthält.

2. Kationische wäßrige Polymerdispersion nach Anspruch 1, **dadurch gekennzeichnet, daß** sie 0,2 bis 15 Trockengew.-% Glyoxal enthält.

3. Kationische wäßrige Polymerdispersion nach Anspruch 1, **dadurch gekennzeichnet, daß** sie 0,5 bis 12 Trockengew.-% Glyoxal enthält.

4. Kationische wäßrige Polymerdispersion nach Anspruch 1, **dadurch gekennzeichnet, daß** sie 1 bis 8 Trockengew.-% Glyoxal enthält.

5. Kationische wäßrige Polymerdispersion nach einem der Ansprüche 1 bis 4, **dadurch gekennzeichnet, daß** es sich bei dem Emulgator um eine 2 bis 30 gew.-%ige wäßrige Lösung eines kationischen imidisierten Styrol/Maleinsäureanhydrid-Copolymers handelt.

6. Kationische wäßrige Polymerdispersion nach einem der Ansprüche 1 bis 5, **dadurch gekennzeichnet, daß** es sich bei dem Emulgator um eine 5 bis 25 gew.-%ige wäßrige Lösung eines kationischen imidisierten Styrol/Maleinsäureanhydrid-Copolymers handelt.

7. Kationische wäßrige Polymerdispersion nach einem der Ansprüche 1 bis 6, **dadurch gekennzeichnet, daß** es sich bei dem Emulgator um eine 10 bis 20 gew.-%ige wäßrige Lösung eines kationischen imidisierten Styrol/Maleinsäureanhydrid-Copolymers handelt.

8. Kationische wäßrige Polymerdispersion nach einem der Ansprüche 1 bis 7, **dadurch gekennzeichnet, daß** das Copolymer mit Dimethylpropylendiamin imidisiert ist.

9. Verfahren zur Herstellung einer kationischen feinteiligen wäßrigen Polymerdispersion, **gekennzeichnet durch**:
(1) die Herstellung einer wäßrigen Lösung eines imidisierten Styrol/Maleinsäureanhydrid-Copolymers und nachfolgende Kationisierung mit einer Säure, wobei man eine wäßrige Lösung eines kationischen imidisierten Styrol/Maleinsäureanhydrid-Copolymers erhält, und
(2) die Emulsionspolymerisation einer Monomerenmischung, die
(a) 20 bis 65 Gew.-% mindestens eines gegebenenfalls substituierten Styrols,
(b) 35 bis 80 Gew.-% mindestens eines C₁-C₁₈-(Meth)acrylsäureesters,
(c) 0 bis 20 Gew.-% mindestens eines von a) und b) verschiedenen ethylenisch ungesättigten nichtionischen Monomers,
(d) 0 bis 20 Gew.-% mindestens einer ethylenisch ungesättigten C₃-C₆-Carbonsäure oder eines entsprechenden Salzes davon,
wobei sich die Summe von (a) + (b) + (c) + (d) auf 100 Gew.-% beläuft,
enthält, in Gegenwart der wäßrigen Lösung und
(3) Zugabe von Glyoxal.

10. Verwendung einer kationischen feinteiligen wäßrigen Polymerdispersion gemäß einem der Ansprüche 1 bis 8 als Masse- oder Oberflächenleimungsmittel zur Behandlung von Produkten auf Cellulosebasis.

11. Verwendung einer kationischen feinteiligen wäßrigen Polymerdispersion gemäß einem der Ansprüche 1 bis 8 als Oberflächenleimungsmittel für Papier und Pappe.

12. Verfahren zur Herstellung von Papier oder Pappe, bei dem man das Papier bzw. die Pappe auf herkömmliche Art und Weise herstellt, aber in den Cellulosefaserstoff nach der Raffinierung, aber vor der Blattbildung eine kationische wäßrige Polymerdispersion gemäß einem der Ansprüche 1 bis 8 einarbeitet.

13. Verfahren zur Herstellung von Papier oder Pappe, bei dem man das Papier bzw. die Pappe auf herkömmliche Art und Weise herstellt, aber auf die Oberfläche des Cellulosematerials eine kationische wäßrige Polymerdispersion gemäß einem der Ansprüche 1 bis 8 aufbringt.

14. Papier oder Pappe, hergestellt nach einem der Ansprüche 12 und 13.

## Revendications

1. Dispersion aqueuse cationique de polymères, comprenant de fines particules, **caractérisée en ce qu'**elle comprend au moins :
(1) le produit d'une polymérisation en émulsion d'un mélange de monomères comprenant en poids :
(a) de 20 à 65 % d'au moins un styrène éventuellement substitué,
(b) de 35 à 80 % d'au moins un ester (méth)acrylique en C₁-C₁₈,
(c) de 0 à 20 % d'au moins un monomère non ionique à insaturation éthylénique différent de (a) et (b),
(d) de 0 à 20 % d'au moins un acide carboxylique à insaturation éthylénique en C₃-C₆ ou un de ses sels correspondants,
la somme de (a) + (b) + (c) + (d) étant de 100 % en poids,
le mélange de monomères étant polymérisé en présence d'un émulsifiant qui est une solution aqueuse d'un copolymère cationique de styrène et d'anhydride maléique imidisé,
(2) du glyoxal.

2. Dispersion aqueuse cationique de polymères selon la revendication 1, **caractérisée par le fait qu'**elle contient de 0,2 % à 15 % en poids sec de glyoxal.

3. Dispersion aqueuse cationique de polymères selon la revendication 1, **caractérisée par le fait qu'**elle contient de 0,5 % à 12 % en poids sec de glyoxal.

4. Dispersion aqueuse cationique de polymères selon la revendication 1, **caractérisée par le fait qu'**elle contient de 1 % à 8 % en poids sec de glyoxal.

5. Dispersion aqueuse cationique de polymères selon l'une des revendications 1 à 4, **caractérisée par le fait que** l'émulsifiant est une solution aqueuse d'un copolymère cationique styrène / anhydride maléique imidisé de 2 à 30 % en poids.

6. Dispersion aqueuse cationique de polymères selon l'une des revendications 1 à 5, **caractérisée par le fait que** l'émulsifiant est une solution aqueuse d'un copolymère cationique styrène / anhydride maléique imidisé de 5 à 25 % en poids.

7. Dispersion aqueuse cationique de polymères selon l'une des revendications 1 à 6, **caractérisée par le fait que** l'émulsifiant est une solution aqueuse d'un copolymère cationique styrène / anhydride maléique imidisé de 10 % à 20 % en poids.

8. Dispersion aqueuse cationique de polymères selon l'une des revendications 1 à 7, **caractérisée par le fait que** ledit copolymère est imidisé par la diméthylpropylène diamine.

9. Procédé de préparation d'une dispersion aqueuse cationique de polymères, comprenant de fines particules, **caractérisé par** :
(1) la préparation d'une solution aqueuse d'un copolymère styrène / anhydride maléique imidisé puis cationisation par un acide pour obtenir une solution aqueuse d'un copolymère cationique de styrène / anhydride maléique imidisé et
(2) la polymérisation en émulsion d'un mélange de monomères comprenant :
(a) de 20 à 65 % en poids d'au moins un styrène éventuellement substitué,
(b) de 35 à 80 % en poids d'au moins un ester (méth)acrylique en C₁-C₁₈,
(c) de 0 à 20 % en poids d'au moins un monomère non ionique à insaturation éthylénique différent de a) et b),
(d) de 0 à 20 % en poids d'au moins un acide carboxylique à insaturation éthylénique en C₃-C₆ ou un de ses sels correspondants,
la somme de (a) + (b) + (c) + (d) étant de 100 % en poids, en présence de ladite solution aqueuse et
(3) addition de glyoxal.

10. Utilisation d'une dispersion aqueuse cationique de polyméres, comprenant de fines particules, telle que définie à l'une des revendications 1 à 8 comme agent de collage interne ou de surface pour le traitement des produits à base de cellulose.

11. Utilisation d'une dispersion aqueuse cationique de polymères, comprenant de fines particules, telle que définie à l'une des revendications 1 à 8 comme agent de collage de surface des papiers et cartons.

12. Procédé de fabrication de papier ou carton dans lequel on prépare conventionnellement ledit papier ou carton, mais on incorpore dans la pâte de fibres cellulosiques après son raffinage mais avant qu'elle ne soit transformée en feuilles, une dispersion aqueuse cationique de polymères telle que définie à l'une des revendications 1 à 8.

13. Procédé de fabrication de papier ou carton dans lequel on prépare conventionnellement ledit papier ou carton, mais on applique en surface du matériau cellulosique une dispersion aqueuse cationique de polymères telle que définie à l'une des revendications 1 à 8.

14. Papier ou carton fabriqué selon l'une des revendications 12 et 13.
